# EUROPÄISCHE PATENTANMELDUNG

(11) **EP 4 275 854 A1**
(43) Veröffentlichungstag der Anmeldung: **15.11.2023**
(21) Anmeldenummer: 22172995.7
(22) Anmeldetag: 12.05.2022
(51) Int. Cl.: B27B 5/38, F16D 63/00

(54) **BLOCKIERELEMENT FÜR EINE NOTBREMSEINHEIT EINER SÄGEVORRICHTUNG SOWIE SÄGEVORRICHTUNG**

(71) Anmelder: Festool GmbH, 73240 Wendlingen am Neckar (DE)
(72) Erfinder: FRANK, Josua, 73660 Urbach (DE); CAPUTO, Jonathan, 75382 Althengstett (DE); MAJER, Michael, 73274 Notzingen (DE); SCHMID, Markus, 73066 Uhingen (DE); SCHOCK, Christian, 73614 Schorndorf (DE)
(74) Vertreter: Maiwald GmbH

(57) **Zusammenfassung**

Es wird ein Blockierelement (26) für eine Notbremseinheit (24) einer Sägevorrichtung (10) mit kreisscheibenförmigem Sägeblatt (12) beschrieben. Dabei umfasst das Blockierelement (26) einen Lagerabschnitt (38), über den das Blockierelement (26) an der Sägevorrichtung (10) lagerbar ist, einen Kopfabschnitt (42), der dazu ausgebildet ist, wahlweise zum Bremsen in das Sägeblatt (12) einzugreifen, und einen Verformungsabschnitt (64). Der Verformungsabschnitt (64) liegt zwischen dem Lagerabschnitt (38) und dem Kopfabschnitt (42) und/oder verbindet den Lagerabschnitt (38) und den Kopfabschnitt (42) miteinander. Dabei ist der Verformungsabschnitt (64) bogenförmig und dazu ausgebildet, zum Bremsen des Sägeblatts (12) entlang einer Bogenumfangsrichtung (66) plastisch verkürzt zu werden. Ferner wird eine Sägevorrichtung (10) mit einem kreisscheibenförmigen Sägeblatt (12) und einer Notbremseinheit (24) vorgestellt. Die Notbremseinheit (24) umfasst ein derartiges Blockierelement (26). Dabei ist das Blockierelement (26) derart an der Sägevorrichtung (10) gelagert, dass es zum Bremsen des Sägeblatts (12) wahlweise in das Sägeblatt (12) eingreifen kann.

## Beschreibung

Die Erfindung betrifft ein Blockierelement für eine Notbremseinheit einer Sägevorrichtung mit kreisscheibenförmigem Sägeblatt.

Ferner betrifft die Erfindung eine Sägevorrichtung mit einem kreisscheibenförmigen Sägeblatt und einer Notbremseinheit, wobei die Notbremseinheit ein solches Blockierelement umfasst.

Sägevorrichtungen mit Notbremseinheiten sind aus dem Stand der Technik bekannt.

Dabei dient die Notbremseinheit und insbesondere das davon umfasste Blockierelement dazu, bei drohender oder bestehender Verletzungsgefahr eine Rotation des Sägeblatts zu stoppen. Auf diese Weise werden Verletzungen von Nutzern der Sägevorrichtungen vermieden oder zumindest in ihrer Schwere reduziert. Mit anderen Worten wird ein sicherer Betrieb der Sägevorrichtung gewährleistet.

In diesem Zusammenhang ist es wichtig, die Rotation des Sägeblatts innerhalb einer vergleichsweise kurzen Zeit zu stoppen. Das bedeutet jedoch, dass die kinetische Energie des Sägeblatts innerhalb dieser kurzen Zeit von den Komponenten der Notbremseinheit und/oder den übrigen Komponenten der Sägevorrichtung aufgenommen werden muss. Es wirken daher vergleichsweise hohe Kräfte auf die Komponenten der Notbremseinheit und/oder die übrigen Komponenten der Sägevorrichtung.

Das kann dazu führen, dass nach einer Nutzung der Notbremseinheit eine oder mehrere Komponenten davon sowie eine oder mehrere Komponenten der Sägevorrichtung verformt oder anderweitig beschädigt sind, sodass diese vor einer Wiederinbetriebnahme der Sägevorrichtung ausgetauscht werden müssen.

Es ist daher die Aufgabe der vorliegenden Erfindung, eine Notbremseinheit anzugeben, mittels der eine Rotation eines Sägeblatts innerhalb einer vergleichsweise kurzen Zeit gestoppt werden kann, wobei gleichzeitig möglichst wenige Komponenten der Notbremseinheit und/oder einer zugehörigen Sägevorrichtung in ihrer Funktionstüchtigkeit beeinträchtigt werden.

Die Aufgabe wird durch ein Blockierelement für eine Notbremseinheit einer Sägevorrichtung mit kreisscheibenförmigem Sägeblatt gelöst. Das Blockierelement umfasst einen Lagerabschnitt, über den das Blockierelement an der Sägevorrichtung, insbesondere drehbar, lagerbar ist. Ferner umfasst das Blockierelement einen Kopfabschnitt, der dazu ausgebildet ist, wahlweise zum Bremsen in das Sägeblatt einzugreifen. Außerdem umfasst das Blockierelement einen Verformungsabschnitt, der zwischen dem Lagerabschnitt und dem Kopfabschnitt liegt und/oder den Lagerabschnitt und den Kopfabschnitt miteinander verbindet. Der Verformungsabschnitt ist bogenförmig und dazu ausgebildet, zum Bremsen des Sägeblatts entlang einer Bogenumfangsrichtung plastisch verkürzt zu werden. Es kann somit die kinetische Energie der Rotation des Sägeblatts zuverlässig und zielgerichtet in eine plastische Verkürzung des Verformungsabschnitts umgesetzt werden. Das wird insbesondere durch die Bogenform des Verformungsabschnitts und seine Lage zwischen dem Lagerabschnitt und dem Kopfabschnitt bewirkt. Folglich lässt sich eine Rotation des Sägeblatts in vergleichsweise kurzer Zeit stoppen. Nachdem der Verformungsabschnitt speziell dazu ausgebildet ist, entlang der Bogenumfangsrichtung plastisch verkürzt zu werden, kann er mit Bezug auf den durch den Verformungsabschnitt beanspruchten Bauraum vergleichsweise viel kinetische Energie aufnehmen und in eine plastische Verkürzung umsetzen. Das bedeutet auch, dass aus dem Abbremsen des Sägeblatts resultierende Kräfte zuverlässig und gezielt vom Verformungsabschnitt aufgenommen werden. Dadurch wirken auf die übrigen Komponenten der Notbremseinheit nur vergleichsweise geringe Kräfte. Dasselbe gilt für Komponenten der zugehörigen Sägevorrichtung. Daher werden die übrigen Komponenten der Notbremseinheit sowie die Komponenten der Sägevorrichtung durch einen mittels des Blockierelements herbeigeführten Notbremsvorgang nicht in ihrer Funktionstüchtigkeit beeinflusst. Das gilt insbesondere für das Sägeblatt, das somit bei einer Wiederinbetriebnahme der Sägevorrichtung weiterverwendet werden kann.

Hinsichtlich der bogenförmigen Gestalt des Verformungsabschnitts wird bemerkt, dass auch abschnittsweise bogenförmige Verformungsabschnitte als bogenförmig anzusehen sind. Es ist also auch ein Verformungsabschnitt, der aus einem bogenförmigen Segment und einem geradlinigen Segment zusammengesetzt ist, ein bogenförmiger Verformungsabschnitt.

Eine Bogenform schließt beispielsweise eine Kreisbogenform oder eine Ellipsenbogenform ein. Dabei wird der zu einem Kreisflächensektor gehörende Teil einer Kreislinie als Kreisbogen bezeichnet. Analog dazu wird der zu einem Ellipsenflächensektor gehörende Teil einer Ellipsenlinie als Ellipsenbogen bezeichnet.

Bevorzugt sind der Lagerabschnitt und der Kopfabschnitt des Blockierelements an entgegengesetzten Enden des Blockierelements vorgesehen.

Dabei kann der Lagerabschnitt eine Aufnahme für ein Lagerelement, z. B. einen Lagerbolzen aufweisen. Vorzugsweise verläuft eine Mittelachse einer derartigen Aufnahme parallel zu einer der Bogenumfangsrichtung des Verformungsabschnitts zugeordneten Mittelachse. Somit ist das Blockierelement über den Lagerabschnitt drehbar am Lagerbolzen gelagert.

Darüber hinaus kann am Kopfabschnitt eine Schnittstelle zur Kopplung des Blockierelements mit einem Aktuator vorgesehen sein. Das Blockierelement, genauer gesagt der zugehörige Kopfabschnitt, kann somit schnell und zuverlässig in Eingriff mit dem Sägeblatt gebracht werden.

Zudem kann am Kopfabschnitt eine Schnittstelle zur Arretierung des Blockierelements in einer später noch zu erläuternden Normalstellung vorgesehen sein. Eine derartige Arretierung bewirkt, dass der Kopfabschnitt nicht in unerwünschter Weise in Eingriff mit dem Sägeblatt gelangt.

Die Schnittstelle zur Kopplung des Blockierelements mit einem Aktuator und die Schnittstelle zur Arretierung des Blockierelements in der Normalstellung können kombiniert oder integral ausgebildet sein.

Eine Sägevorrichtung mit einem kreisscheibenförmigen Sägeblatt kann in diesem Zusammenhang auch als Kreissägevorrichtung oder schlicht als Kreissäge bezeichnet werden. Beispiele für solche Sägevorrichtungen sind Kappsägen, Tischkreissägen, Handkreissägen und Tauchsägen.

Blockierelemente für Notbremseinheiten von Sägevorrichtungen werden umgangssprachlich auch als Bremskeile bezeichnet. Das ist unabhängig davon der Fall, ob das Blockierelement keilförmig ausgebildet ist oder als Keil wirkt.

In einem Zustand, in dem das Blockierelement in einer Sägevorrichtung montiert ist, kann der bogenförmige Verformungsabschnitt insbesondere konzentrisch zum kreisscheibenförmigen Sägeblatt angeordnet sein. Auf diese Weise kann das Blockierelement schnell und zuverlässig ins Sägeblatt eingreifen. Ferner kann so die kinetische Energie der Rotation des Sägeblatts einfach und zuverlässig ins Blockierelement und insbesondere den Verformungsabschnitt eingeleitet werden. Außerdem ist eine solche Anordnung des Verformungsabschnitts platzsparend.

Bevorzugt ist das Blockierelement einstückig ausgeführt und/oder einstückig hergestellt. Beispielsweise lässt sich das Blockierelement als Gussteil oder Spritzgussteil ausführen.

Einstückig ausgeführte Blockierelemente lassen sich nach Gebrauch, d.h. wenn der Verformungsabschnitt plastisch verkürzt ist, einfach recyceln. Beispielsweise können gebrauchte Blockierelemente eingeschmolzen und zu neuen Blockierelementen verarbeitet werden.

Das Blockierelement kann aus Kunststoffmaterial oder aus Metallmaterial, z. B. aus einer Aluminiumlegierung, hergestellt sein.

In einer Ausführungsform erstreckt sich der Verformungsabschnitt über einen Abschnitt der Bogenumfangsrichtung mit einem Mittelpunktswinkel von 15 Grad bis 90 Grad. Je nach Anwendungsfall kann somit eine geeignete umfangsmäßige Länge des Verformungsabschnitts eingestellt werden. Mit anderen Worten kann eine geeignete Länge einer Bremsstrecke für das Sägeblatt eingestellt werden. Auf diese Weise wird sichergestellt, dass das Sägeblatt zuverlässig und innerhalb einer vorgegebenen Zeitspanne zum Stehen kommt.

Beispielhafte Verformungsabschnitte erstrecken sich über einen Abschnitt der Bogenumfangsrichtung mit einem Mittelpunktswinkel von ca. 40 Grad, ca. 45 Grad, ca. 50 Grad, ca. 55 Grad oder ca. 60 Grad. In einem anderen Beispielfall erstreckt sich der Verformungsabschnitt über einen Abschnitt der Bogenumfangsrichtung mit einem Mittelpunktswinkel von ca. 65 Grad, ca. 70 Grad oder ca. 75 Grad.

Der Kopfabschnitt kann dabei entlang der Bogenumfangsrichtung kürzer sein als der Verformungsabschnitt. Somit wird für den Verformungsabschnitt ein vergleichsweise großer Bauraum zur Verfügung gestellt. Das hat zur Folge, dass die vom Verformungsabschnitt aufzunehmende Energie über einen vergleichsweise langen Zeitraum aufgenommen werden kann. Dies reduziert die mechanische Belastung der übrigen Komponenten der Sägevorrichtung.

In diesem Zusammenhang erstrecken sich beispielhafte Kopfabschnitte über einen Abschnitt der Bogenumfangsrichtung mit einem Mittelpunktswinkel von ca. 20 Grad, ca. 25 Grad, ca. 30 Grad, ca. 35 Grad oder ca. 40 Grad.

In einem Beispiel erstreckt sich der Kopfabschnitt über einen Abschnitt der Bogenumfangsrichtung mit einem Mittelpunktswinkel von ca. 30 Grad und der Verformungsabschnitt zusammen mit dem Lagerabschnitt über einen Abschnitt der Bogenumfangsrichtung mit einem Mittelpunktswinkel von ca. 60 Grad. Der Verformungsabschnitt und der Lagerabschnitt sind also zusammen doppelt so lang wie der Kopfabschnitt. In diesem Beispiel erstreckt sich das Blockierelement insgesamt über einen Abschnitt der Bogenumfangsrichtung mit einem Mittelpunktswinkel von ca. 90°.

Gemäß einer Variante springt der Kopfabschnitt bezüglich der Bogenumfangsrichtung gegenüber dem Verformungsabschnitt nach radial innen vor. Es hat also in einem montierten Zustand des Blockierelements der Verformungsabschnitt einen größeren Abstand von einem Außenumfang des Sägeblatts als der Kopfabschnitt. Aufgrund des vergleichsweise kürzeren Abstands kann der Kopfabschnitt schnell und zuverlässig ins Sägeblatt eingreifen. Der Abstand des Verformungsabschnitts vom Außenumfang des Sägeblatts kann ferner so gewählt sein, dass auch in einem plastisch verformten Zustand des Verformungsabschnitts dieser noch vom Sägeblatt beabstandet ist. Auf diese Weise wird die plastische Verkürzung des Verformungsabschnitts nicht durch einen eventuellen Kontakt zwischen dem Verformungsabschnitt und dem Außenumfang des Sägeblatts, insbesondere der Zähne, behindert. Der Abstand des Verformungsabschnitts vom Außenumfang des Sägeblatts und/oder einer Antriebswelle des Sägeblatts kann bei unterschiedlichen Blockierelementen, die für eine Verwendung in unterschiedlichen Sägevorrichtungen vorgesehen sind, unterschiedlich groß ausgeführt werden. Somit kann das Blockierelement an unterschiedliche Sägevorrichtungen mit unterschiedlichen Sägeblättern angepasst werden.

In demjenigen Bereich des Kopfabschnitts, der gegenüber dem Verformungsabschnitt nach radial innen vorspringt, kann ein Eingriffsabschnitt oder Einsägeabschnitt für das Sägeblatt vorgesehen sein. Dieser Abschnitt ist speziell dazu ausgeprägt, das Sägeblatt zuverlässig mit dem Kopfabschnitt zu koppeln. Hierzu kann der Eingriffsabschnitt oder Einsägeabschnitt ein Material umfassen, das sich besonders leicht einsägen lässt. Dies führt zu einer sanften Kopplung zwischen Sägeblatt und Kopfabschnitt, also einem sanften Übergang von einem nicht gekoppelten in einen koppelten Zustand von Sägeblatt und Kopfabschnitt.

Ferner kann vorgesehen sein, dass der Kopfabschnitt Bereiche unterschiedlicher Steifigkeit und/oder unterschiedlicher Duktilität umfasst. Dies kann durch eine entsprechende Anordnung von Hohlräumen und/oder Materialien erfolgen. Die Hohlräume können als Löcher oder Bohrungen ausgeführt sein. Alternativ können unterschiedliche Steifigkeiten durch eine entsprechende Formgebung des Kopfabschnitts erreicht werden. In beiden Varianten kann somit ein Bereich des Kopfabschnitts, der beim Eingreifen des Kopfabschnitts ins Sägeblatt zuerst eingesägt wird, mit einer vergleichsweise geringen Steifigkeit und/oder Duktilität versehen werden. Nachfolgend eingesägte Bereiche können mit einer größeren Steifigkeit und/oder einer größeren Duktilität ausgestattet sein. Somit wird eine Kopplung des Sägeblatts mit dem Kopfabschnitt in sanfter Weise hergestellt. Gleichzeitig ist die Kopplung, einmal hergestellt, vergleichsweise fest, sodass hohe Kräfte übertragen werden können.

In einer Ausführungsform umfasst der Kopfabschnitt Bereiche unterschiedlicher Materialien. Wie bereits erläutert, können durch unterschiedliche Materialien Bereiche unterschiedlicher Steifigkeit und/oder unterschiedlicher Duktilität innerhalb des Kopfabschnitts geschaffen werden. In diesem Zusammenhang kann beispielsweise im Bereich eines dem Sägeblatt zugewandten Endes des Kopfabschnitts und/oder in einem innerhalb einer Sägeblattebene liegenden Bereich ein vergleichsweise weiches Material, z.B. Kunststoff, verwendet werden. Folglich ist zum Einsägen dieses Bereichs eine vergleichsweise kleine Schnittkraft nötig, sodass sich ein sanftes Einsägen ergibt. Weitere Bereiche können ein Metallmaterial umfassen.

In einem Beispiel weist der Kopfabschnitt eine Führungsfläche zum Beaufschlagen des Kopfabschnitts in Richtung des Sägeblatts auf. Die Führungsfläche weist eine Normale mit einer Erstreckungskomponente nach radial außen auf. Dabei ist die Radialrichtung mit Bezug auf die Bogenumfangsrichtung definiert. Das Beaufschlagen umfasst insbesondere ein Kraftbeaufschlagen. Der Kopfabschnitt lässt sich also mit Kraft in Richtung des Sägeblatts beaufschlagen, sodass sich zum Abbremsen des Sägeblatts eine zuverlässige Kopplung zwischen dem Sägeblatt und dem Kopfabschnitt ergibt. Dabei kann die Führungsfläche eben ausgeführt sein. Alternativ umfasst die Führungsfläche einen Abschnitt einer Kreiszylindermantelfläche. Die Führungsfläche ist also gekrümmt. In beiden Fällen kann die Führungsfläche so ausgebildet sein, dass sich bei einer Kopplung des Kopfabschnitts mit dem Sägeblatt eine Selbstverstärkung ergibt, d.h. die Führungsfläche den Kopfabschnitt weiter in Richtung zum Sägeblatt beaufschlagt.

Der Kopfabschnitt kann entlang der Bogenumfangsrichtung eine größere Steifigkeit aufweisen als der Verformungsabschnitt. Somit wird bei einer Nutzung des Blockierelements gezielt der Verformungsabschnitt verformt. Die kinetische Energie der Rotation des Sägeblatts wird somit gezielt vom Verformungsabschnitt aufgenommen. Der Kopfabschnitt verformt sich im Vergleich dazu weniger. Insbesondere können die Steifigkeiten von Kopfabschnitt und Verformungsabschnitt derart eingestellt sein, dass sich der Kopfabschnitt im Wesentlichen nicht verformt. In einem Beispiel ist eine Steifigkeit des Kopfabschnitts doppelt so groß wie eine Steifigkeit des Verformungsabschnitts.

Es versteht sich, dass der Verformungsabschnitt dazu ausgebildet ist, im Wesentlichen die gesamte kinetische Energie der Rotation des Sägeblatts aufzunehmen. Selbstverständlich wird jedoch auch ein Anteil der kinetischen Energie durch das Einsägen des Kopfabschnitts sowie durch eine Verformung des Kopfabschnitts von diesem aufgenommen. Dabei ist jedoch der vom Kopfabschnitt aufgenommene Anteil der kinetischen Energie vergleichsweise klein oder gegenüber dem vom Verformungsabschnitt aufgenommenen Anteil sogar vernachlässigbar.

Gemäß einer Variante umfasst der Verformungsabschnitt eine in der Bogenumfangsrichtung plastisch verformbare Struktur mit Soll-Verformungsstellen. Eine plastische Verkürzung des Verformungsabschnitts wird also dadurch erreicht, dass die verformbare Struktur plastisch verformt wird. Insbesondere findet dabei die Verformung im Bereich der Soll-Verformungsstellen statt. Dadurch ergibt sich eine wohl-definierte Verformung des Verformungsabschnitts. Mit anderen Worten wird verhindert, dass der Verformungsabschnitt im Zuge seiner plastischen Verkürzung in unerwünschte Bereiche verlagert wird, z. B. in unerwünschter Weise ausbaucht oder einknickt.

Insbesondere umfasst die plastisch verformbare Struktur Strukturelemente, die dazu ausgebildet sind, bei einer Kraftbeaufschlagung umzuklappen, umzuschlagen oder sich zusammenzufalten. Derartige Strukturelemente können entlang des Kraftflusses und/oder schräg und/oder quer zum Kraftfluss verlaufen. Auch ist es möglich, dass die plastisch verformbare Struktur ein plastisch komprimierbares Material umfasst. Ein Beispiel für ein plastisch komprimierbares Material ist ein poröses Material wie ein Schaummaterial.

Der Verformungsabschnitt kann eine Mehrzahl an Hohlräumen aufweisen. Die Hohlräume sind entlang der Bogenumfangsrichtung benachbart angeordnet. Dabei sind die Hohlräume als makroskopische Hohlräume zu verstehen. Die Hohlräume bilden somit entlang der Bogenumfangsrichtung eine Reihe. Dabei ist es selbstverständlich möglich, auch zwei oder mehr Reihen an Hohlräumen vorzusehen. Ferner dienen die Hohlräume dazu, entlang der Bogenumfangsrichtung zusammengeklappt oder zusammengefaltet zu werden und so die aus der Rotation des Sägeblatts resultierende kinetische Energie in eine plastische Verformung des Verformungsabschnitts umzusetzen. Durch die Anzahl, Anordnung, Gestalt und Größe der Hohlräume kann das Verformungsverhalten des Verformungsabschnitts gezielt eingestellt werden.

In einer Gestaltungsalternative sind die Hohlräume in einer Richtung, die bezüglich der Bogenumfangsrichtung axial verläuft, durchgehend. Die Hohlräume sind also auf beiden axialen Seiten offen und stellen folglich Durchgangsöffnungen dar. Solche Hohlräume lassen sich besonders leicht herstellen. Zudem lassen sich derartige Hohlräume zur Energieaufnahme besonders gut zusammenklappen oder zusammenfalten.

Die Hohlräume können einerseits subtraktiv gefertigt werden. In diesem Zusammenhang werden die Hohlräume ausgehend von einem wenigstens teilweise massiven Verformungsabschnitt durch Materialwegnahme geschaffen. Dabei können die Hohlräume durch Ausschneiden, Ausstanzen, Fräsen, Bohren oder andere geeignete Fertigungsverfahren hergestellt werden. Andererseits können die Hohlräume bereits beim Herstellen des Verformungsabschnitts in diesen eingebracht werden. Für den Fall, dass der Verformungsabschnitt mittels eines Guss- oder Spritzgussverfahrens hergestellt wird, lassen sich die Hohlräume bereits mittels dieses Guss- oder Spritzgussverfahrens vorsehen.

Eine Gruppe an Hohlräumen kann in diesem Zusammenhang auch als Hohlraummuster oder Muster an Hohlräumen bezeichnet werden.

In einer Variante ist wenigstens ein Hohlraum durch eine Wand mit konstanter Wandstärke begrenzt. Derartige Hohlräume lassen sich besonders zuverlässig zusammenfalten oder zusammenklappen. Dies ist von der Richtung der Kraftbeaufschlagung, der Form des Hohlraums und der Wandstärke abhängig. Über die Wandstärke kann insbesondere eingestellt werden, welche Kraft nötig ist, um den Hohlraum zusammenzufalten oder zusammenzuklappen. Es kann also die Wandstärke variiert werden, um das Blockierelement an unterschiedliche Sägevorrichtungen anzupassen. Ferner sind konstante Wandstärken insbesondere für eine Herstellung des Verformungsabschnitts mittels eines Guss- oder Spritzgussverfahrens günstig.

Die Tatsache, dass ein Hohlraum oder mehrere Hohlräume jeweils eine konstante Wandstärke aufweisen, schließt nicht aus, dass innerhalb des Verformungsabschnitts Hohlräume mit unterschiedlichen Wandstärken vorgesehen sind. Insbesondere lassen sich in diesem Zusammenhang Wandstärken variieren, um eine Steifigkeit des Verformungsabschnitts einzustellen. Dabei kann auch ein Steifigkeitsverlauf innerhalb des Verformungsabschnitts geschaffen werden.

Die Hohlräume können durch benachbart angeordnete Ringsegmente gebildet sein. Derartige Ringsegmente lassen sich definiert entlang der Bogenumfangsrichtung zusammenklappen oder zusammenfalten und können infolgedessen in definierter Weise kinetische Energie in eine plastische Verformung umsetzen. Dabei können die Ringsegmente voneinander beabstandet, direkt aneinander angrenzend oder ineinander geschachtelt ausgeführt sein.

In einem Beispiel umfasst ein Verformungsabschnitt, der mit einer einzigen Reihe an Hohlräumen versehen ist, 5 bis 20 Ringsegmente. Eine erste bevorzugte Ausführungsform weist dabei sieben Ringsegmente auf. Eine zweite bevorzugte Ausführungsform umfasst elf Ringsegmente.

In einem Ausführungsbeispiel weist wenigstens einer der Hohlräume einen kreisförmigen, sichelmondförmigen oder polygonförmigen Querschnitt auf. In diesem Zusammenhang wird unter einer Sichelmondform eine Differenzfläche zweier überlappender Kreisflächen verstanden. Die Querschnittsform der Hohlräume definiert dabei ein Verhältnis einer Länge des Verformungsabschnitts in einem nicht verformten Zustand und in einem plastisch verformten Zustand. Es kann also durch eine Wahl der Querschnittsform eingestellt werden, wie stark sich der Verformungsabschnitt bei entsprechender Kraftbeaufschlagung plastisch verkürzt.

In diesem Zusammenhang sind die Hohlräume von Ringsegmenten mit einem kreis- oder kreisabschnittförmigen Querschnitt von einer Wand begrenzt, die wenigstens abschnittsweise kreiszylindermantelförmig ist. Bei Hohlräumen mit polygonförmigem Querschnitt hat die zugehörige Wand die Form eines Mantels eines Zylinders mit polygonförmiger Grundfläche. Bei derartigen Ringsegmenten ist es besonders vorteilhaft, wenn zumindest eine Ecke des Querschnitts bezüglich der Bogenumfangsrichtung des Verformungsabschnitts nach radial innen oder radial außen weist. Derartige Ringsegmente lassen sich mit besonderer Präzision entlang der Bogenumfangsrichtung zusammenklappen.

In einem Fall, in dem der Verformungsabschnitt eine Reihe an Ringsegmenten umfasst und gleichzeitig der Verformungsabschnitt in einem plastisch verkürzten Zustand, d.h. in einer Endstellung des Blockierelements, einen Abstand größer null vom Außenumfang des Sägeblatts aufweisen soll, kann eine bezüglich der Bogenumfangsrichtung radiale Erstreckung des Verformungsabschnitts als die Summe aus einer Hälfte des Innenumfangs des Hohlraums und dem Doppelten der Wandstärke des zugehörigen Ringsegments berechnet werden. Dabei liegt die Vorstellung zugrunde, dass das Ringsegment in Umfangsrichtung derart komprimiert wird, dass der Hohlraum vollständig geschlossen ist. Um einen Abstand vom Außenumfang des Sägeblatts zu gewährleisten, muss die radiale Erstreckung des Verformungsabschnitts in seinem verformten Zustand kleiner sein als ein radialer Abstand zwischen dem Außenumfang des Sägeblatts und dem Führungselement.

Im Inneren wenigstens eines Hohlraums kann ein Füllmaterial angeordnet sein. Das Füllmaterial kann auch als Inlay bezeichnet werden. Bevorzugt ist dabei das Füllmaterial von demjenigen Material verschieden, aus dem der Verformungsabschnitt an sich hergestellt ist. Das Füllmaterial kann elastisch und/oder plastisch verformbar sein. Folglich lässt sich mittels des Füllmaterials eine Steifigkeit des Verformungsabschnitts und damit dessen Verformungsverhalten weiter einstellen. Dabei kann in einem einzelnen Hohlraum, in einer Gruppe an Hohlräumen oder in allen Hohlräumen ein Füllmaterial angeordnet sein.

Ferner kann der Verformungsabschnitt einen Steifigkeitsverlauf aufweisen. Entlang der Bogenumfangsrichtung ist eine Steifigkeit des Verformungsabschnitts also nicht konstant. Das kann dadurch erreicht werden, dass benachbarte Abschnitte, z. B. benachbarte Ringsegmente, einer plastisch verformbaren Struktur des Verformungsabschnitts unterschiedliche Steifigkeiten aufweisen. In einem ersten Beispiel weist der Verformungsabschnitt an einem dem Kopfabschnitt zugewandten Ende eine geringere Steifigkeit auf als an einem dem Lagerabschnitt zugewandten Ende. In einem zweiten Beispiel ist es umgekehrt, d.h. der Verformungsabschnitt weist an einem dem Kopfabschnitt zugewandten Ende eine größere Steifigkeit auf als an einem dem Lagerabschnitt zugewandten Ende. In beiden Fällen dient ein Steifigkeitsverlauf dazu, die aus der Rotation des Sägeblatts stammende kinetische Energie und die damit verbundenen Kräfte sanft und ruckfrei in den Verformungsabschnitt einzuleiten. Das Sägeblatt wird somit sanft gebremst. Gleichzeitig kann mittels eines Steifigkeitsverlaufs, der einen großen Gradienten aufweist, eine starke Bremswirkung gewährleistet werden.

Die Aufgabe wird darüber hinaus von einer Sägevorrichtung mit einem kreisscheibenförmigen Sägeblatt und einer Notbremseinheit gelöst. Die Notbremseinheit umfasst ein Blockierelement gemäß der vorliegenden Erfindung. Dabei ist das Blockierelement derart an der Sägevorrichtung gelagert, dass es zum Bremsen des Sägeblatts wahlweise in das Sägeblatt eingreifen kann. Es kann somit wahlweise die kinetische Energie der Rotation des Sägeblatts zuverlässig und zielgerichtet in eine plastische Verkürzung des Verformungsabschnitts umgesetzt werden. Somit lässt sich eine Rotation des Sägeblatts in vergleichsweise kurzer Zeit stoppen. Dabei werden die aus dem Abbremsen des Sägeblatts resultierenden Kräfte zuverlässig und gezielt vom Verformungsabschnitt des Blockierelements aufgenommen. Folglich wirken auf die übrigen Komponenten der Notbremseinheit nur vergleichsweise geringe Kräfte. Dasselbe gilt für Komponenten der zugehörigen Sägevorrichtung. Dadurch werden die übrigen Komponenten der Notbremseinheit sowie die Komponenten der Sägevorrichtung durch einen mittels des Blockierelements herbeigeführten Notbremsvorgang nicht in ihrer Funktionstüchtigkeit beeinflusst. Das gilt insbesondere für das Sägeblatt, das bei einer Wiederinbetriebnahme der Sägevorrichtung weiterverwendet werden kann.

Die Notbremseinheit ist im montierten Zustand mit einer Sensoreinheit zum Erkennen einer tatsächlichen oder bevorstehenden Berührung durch einen Nutzer gekoppelt und wird in Abhängigkeit eines Detektionsergebnisses der Sensoreinheit betrieben. Auf diese Weise kann die Notbremseinheit rechtzeitig und zielgerichtet ausgelöst werden, sodass eine Verletzung des Nutzers gänzlich verhindert oder zumindest in ihrer Schwere begrenzt werden kann.

Ferner umfasst die Notbremseinheit einen Aktuator, der selektiv, insbesondere in Abhängigkeit des Detektionsergebnisses, ausgelöst werden kann. Der Aktuator ist mit dem Blockierelement, genauer gesagt mit dem zugehörigen Kopfabschnitt, gekoppelt, sodass dieser schnell und zuverlässig in Eingriff mit dem Sägeblatt gebracht werden kann. Der Aktuator umfasst beispielsweise einen Hubmagneten oder einen Formgedächtnislegierungs-Aktuator.

In einer Normalstellung kann das Blockierelement parallel zu einem Umfang des Sägeblatts angeordnet sein. Damit ist gemeint, dass die das Blockierelement bildenden Abschnitte jeweils entlang eines Außenumfangs des Sägeblatts einen konstanten radialen Abstand vom Sägeblatt aufweisen. Insbesondere haben dabei der Kopfabschnitt und der Lagerabschnitt des Blockierelements entlang des Außenumfangs des Sägeblatts im Wesentlichen den gleichen radialen Abstand von der Mittelachse des Sägeblatts sowie vom Außenumfang des Sägeblatts. Ferner fallen in diesem Zusammenhang bevorzugt eine Mittelachse des bogenförmigen Verformungsabschnitts und eine Drehachse des Sägeblatts im Wesentlichen zusammen. Dabei ist die Normalstellung dadurch definiert, dass das Blockierelement in einer betriebsbereiten Stellung ist, jedoch noch nicht in Eingriff mit dem Sägeblatt gebracht wurde, d.h. die Notbremseinheit wurde noch nicht ausgelöst. Insgesamt ist folglich das Blockierelement einerseits platzsparend innerhalb der Sägevorrichtung platziert und andererseits so angeordnet, dass der Kopfabschnitt des Blockierelements nur einen vergleichsweise kleinen Abstand überwinden muss, um ins Sägeblatt einzugreifen. Dadurch kann das Sägeblatt vergleichsweise schnell zum Stillstand gebracht werden.

In der Normalstellung kann ein radialer Abstand des Verformungsabschnitts vom Sägeblatt größer sein als ein radialer Abstand des Kopfabschnitts vom Sägeblatt. Wie bereits erläutert, wird so verhindert, dass es zu unerwünschten Wechselwirkungen zwischen dem Verformungsabschnitt und dem Sägeblatt kommt.

In einer Endstellung des Blockierelements kann der Verformungsabschnitt radial vom Sägeblatt beabstandet sein. Als eine Endstellung des Blockierelements ist dabei eine Position des Blockierelements zu verstehen, die dieses einnimmt, nachdem es ins Sägeblatt eingegriffen und dessen Rotation bis zum Stillstand abgebremst hat. Die Endstellung betrifft also eine Stellung nach erfolgter Notbremsung. Der Verformungsabschnitt kommt also nicht in Kontakt mit dem Sägeblatt. Auf diese Weise kann sich der Verformungsabschnitt plastisch verformen, ohne dass dies vom Sägeblatt beeinflusst wird. Ferner wird der Verformungsabschnitt nicht an- oder eingesägt. Er bleibt also strukturell intakt, sodass er wirkungsvoll kinetische Energie in plastische Verformung umsetzen kann.

Zudem kann das Blockierelement wahlweise separat von einer Aktuatoreinheit der Notbremseinheit und/oder separat von einer Steuerungseinheit der Notbremseinheit von der Sägevorrichtung demontierbar sein. Dabei bedeutet separat von der Aktuatoreinheit und/oder separat von einer Steuerungseinheit demontierbar, dass das Blockierelement von der Sägevorrichtung demontierbar ist, ohne dass gleichzeitig die Aktuatoreinheit und/oder die Steuerungseinheit der Notbremseinheit demontiert werden müssen bzw. muss. Hiervon nicht umfasst sind selbstverständlich Montageelemente, Lagerelemente, Halteelemente und Befestigungselemente, mittels derer das Blockierelement montiert ist. Mit anderen Worten ist das Blockierelement bezüglich der Aktuatoreinheit und/oder der Steuerungseinheit singulär demontierbar. Somit kann das Blockierelement alleine oder singulär ausgetauscht werden. Die Aktuatoreinheit und/oder die Steuerungseinheit der Notbremseinheit bleiben bzw. bleibt bei einem derartigen Austausch an der Sägevorrichtung montiert. Dadurch kann das Blockierelement schnell und einfach demontiert werden. Das gilt prinzipiell für alle Betriebszustände der Sägevorrichtung und der Notbremseinheit, insbesondere jedoch für einen Zustand nach einer Auslösung der Notbremseinheit, d. h. wenn das Blockierelement ins Sägeblatt eingreift oder ins Sägeblatt eingegriffen hat. Somit lassen sich die Notbremseinheit und die Sägevorrichtung nach dem Auslösen der Notbremseinheit schnell und einfach wieder in Betrieb nehmen. Eine Bearbeitungsaufgabe kann so zeitnah weitergeführt und erledigt werden. Die Tatsache, dass das Blockierelement singulär ausgetauscht werden kann, bewirkt zudem, dass das Auslösen der Notbremseinheit und das Einsatzbereitmachen der ausgelösten Notbremseinheit vergleichsweise wenige Kosten verursacht.

In einer bevorzugten Ausführungsform ist das Blockierelement separat von allen übrigen Komponenten der Notbremseinheit demontierbar. Mit anderen Worten ist das Blockierelement bezüglich aller übrigen Komponenten der Notbremseinheit singulär demontierbar. Die erläuterten Effekte und Vorteile ergeben sich dabei in besonders hohem Maße.

In einer weiteren bevorzugten Ausführungsform sind das Blockierelement, die Aktuatoreinheit und die Steuerungseinheit der Notbremseinheit jeweils separat von allen übrigen Komponenten der Notbremseinheit demontierbar. Mit anderen Worten ist das Blockierelement bezüglich aller übrigen Komponenten der Notbremseinheit singulär demontierbar. Zusätzlich ist die Aktuatoreinheit bezüglich aller übrigen Komponenten der Notbremseinheit singulär demontierbar. Außerdem ist die Steuerungseinheit der Notbremseinheit bezüglich aller übrigen Komponenten der Notbremseinheit singulär demontierbar. Somit können einzelne Komponenten der Notbremseinheit in einfacher Weise ausgetauscht, repariert und/oder gewartet werden.

Die Steuerungseinheit der Notbremseinheit kann in einer ersten Alternative integral mit einer Motorsteuerungseinheit ausgebildet sein, die der Steuerung eines zum Antreiben des Sägeblatts ausgebildeten Antriebsmotors dient. In einer zweiten Alternative sind die Motorsteuerungseinheit und die Steuerungseinheit der Notbremseinheit separat ausgebildet. Sie können jedoch signaltechnisch miteinander verbunden sein, sodass der Antriebmotor beim Auslösen der Notbremseinheit einfach und zuverlässig deaktiviert werden kann.

Die Erfindung wird nachstehend anhand verschiedener Ausführungsbeispiele erläutert, die in den beigefügten Zeichnungen gezeigt sind. Es zeigen:
- Figur 1: eine erfindungsgemäße Sägevorrichtung in einer perspektivischen Ansicht, wobei die erfindungsgemäße Sägevorrichtung eine Notbremseinheit umfasst, die mit einem erfindungsgemäßen Blockierelement ausgestattet ist,
- Figur 2: die Sägevorrichtung aus Figur 1 in einer Seitenansicht, wobei ein Führungselement der Notbremseinheit fortgelassen ist,
- Figur 3: Teile der Sägevorrichtung aus den Figuren 1 und 2 in einer separaten Ansicht,
- Figur 4: eine Detailansicht des Blockierelements,
- Figuren 5 bis 8: Teile der Sägevorrichtung aus den Figuren 1 und 2 zu verschiedenen Zeitpunkten nach dem Auslösen der Notbremseinheit,
- Figur 9: einen Verlauf einer vom Blockierelement aufgenommenen Kraft über der Zeit nach dem Auslösen der Notbremseinheit,
- Figur 10: Teile der Sägevorrichtung aus den Figuren 1 und 2 beim Montieren des Blockierelements,
- Figuren 11 bis 14: alternative Ausführungen zum Halten des Blockierelements in einer Normal stellung,
- Figur 15: Teile einer Sägevorrichtung gemäß einer alternativen Ausführungsform,
- Figur 16: Teile einer Sägevorrichtung gemäß noch einer alternativen Ausführungsform,
- Figur 17: Teile einer Sägevorrichtung gemäß einer weiteren alternativen Ausführungsform, und
- Figur 18: eine zusätzliche Ausführungsform einer erfindungsgemäßen Sägevorrichtung.

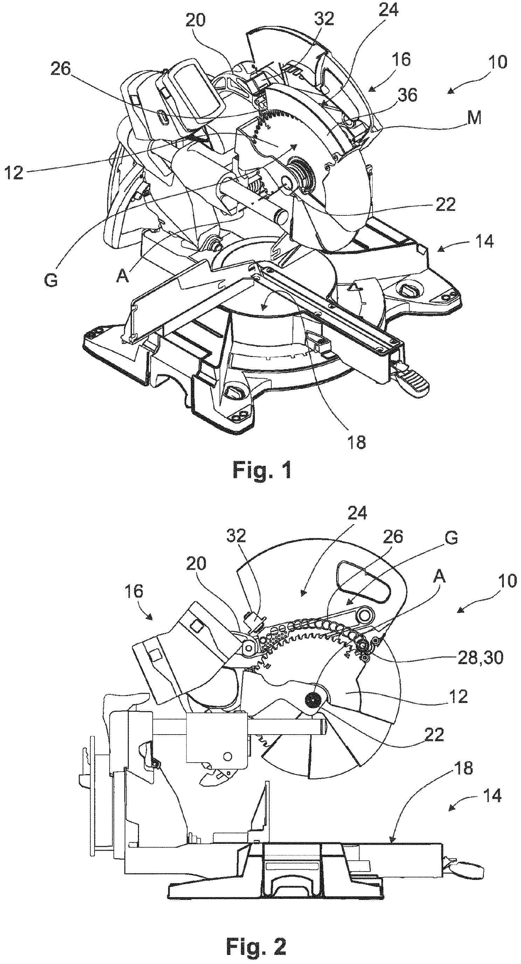

Die Figuren 1 und 2 zeigen eine Sägevorrichtung 10 mit einem kreisscheibenförmigen Sägeblatt 12. Im darstellten Beispiel ist die Sägevorrichtung 10 eine Kappsäge.

Die Sägevorrichtung 10 umfasst eine Basisbaugruppe 14 und eine drehbar daran gelagerte Armbaugruppe 16.

Die Basisbaugruppe 14 hat eine Auflagefläche 18, auf der ein zu bearbeitendes, d.h. abzusägendes oder einzusägendes, Bauteil positioniert werden kann.

Ferner kann das Sägeblatt 12 durch Betätigung eines mit diesem gekoppelten Antriebsmotors M in Rotation um eine Mittelachse A versetzt werden und durch eine Verlagerung der Armbaugruppe 16 relativ zur Basisbaugruppe 14 mit dem zu bearbeitenden Bauteil in Wechselwirkung gebracht werden.

Die Verlagerung der Armbaugruppe 16 relativ zur Basisbaugruppe 14 erfolgt im gezeigten Beispiel manuell.

Dabei umfasst die Armbaugruppe 16 oder allgemeiner gesprochen die Sägevorrichtung 10 einen Rahmen 20, an dem eine Antriebswelle 22 drehantreibbar gelagert ist. Die Antriebswelle 22 ist antriebsmäßig mit dem Antriebsmotor M gekoppelt. Das Sägeblatt 12 ist auf der Antriebswelle 22 fixiert, sodass sich in bekannter Weise das Sägeblatt 12 drehantreiben lässt.

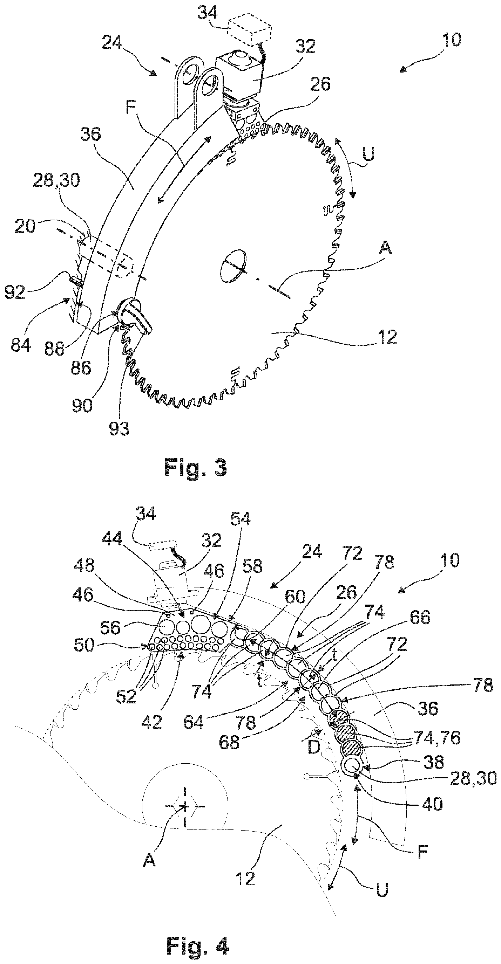

Die Sägevorrichtung 10 ist ferner mit einer Notbremseinheit 24 ausgestattet, die in den Figuren 3 und 4 im Detail zu sehen ist.

Zur besseren Sichtbarkeit der Notbremseinheit 24 ist in den Figuren 1 und 2 in einem Bereich G ein Gehäuseteil nicht dargestellt. Ein solches Gehäuseteil dient einerseits der Ableitung von Werkstückpartikeln, z. b. Sägespänen oder Staub, die durch die Nutzung der Sägevorrichtung 10 erzeugt werden. Andererseits wird mittels eines derartigen Gehäuseteils in der dargestellten Ausführungsform ein Abschnitt des endseitig an der Armbaugruppe 16 vorgesehenen Griffs gebildet. Ferner dient das Gehäuseteil der Abdeckung des Sägeblatts 12.

Die Notbremseinheit 24 umfasst ein Blockierelement 26, das über ein am Rahmen 20 feststehendes Lagerelement 28 in Form eines feststehenden Lagerbolzens 30 derart drehbar an der Sägevorrichtung 10 gelagert ist, dass es zum Bremsen des Sägeblatts 12 wahlweise in das Sägeblatt 12 eingreifen kann.

Zudem umfasst die Notbremseinheit 24 eine Aktuatoreinheit 32, die dazu ausgebildet ist, das Blockierelement 26 wahlweise in Eingriff mit dem Sägeblatt 12 zu bringen.

Im dargestellten Beispiel umfasst die Aktuatoreinheit 32 hierzu einen elektrisch ansteuerbaren Hubmagneten, der in den Figuren nicht näher dargestellt ist.

Die Notbremseinheit 24 umfasst auch eine zugehörige Steuerungseinheit 34.

In der dargestellten Ausführungsform ist die Steuerungseinheit 34 von der Aktuatoreinheit 32 getrennt ausgeführt und angeordnet (siehe z. B. Figuren 3 bis 8). Die Aktuatoreinheit 32 und die Steuerungseinheit 34 sind signaltechnisch über eine Signalleitung gekoppelt.

Diese Konfiguration bewirkt, dass die Aktuatoreinheit 32 und die Steuerungseinheit 34 separat voneinander demontiert werden können. Das erleichtert einen Austausch, eine Reparatur oder Wartung.

Die Steuerungseinheit 34 ist mit einer an sich bekannten Sensoreinheit zum Erkennen einer tatsächlichen oder bevorstehenden Berührung des Sägeblatts 12 durch einen Nutzer gekoppelt.

Somit lässt sich die Aktuatoreinheit 32 in Abhängigkeit eines Detektionsergebnisses der Sensoreinheit betreiben.

Die Notbremseinheit 24 weist ferner ein Führungselement 36 auf, das am Rahmen 20 gelagert ist und eine Bewegung des Blockierelement 26 entlang einer Führungsrichtung F führt, wie nachfolgend noch im Detail erläutert werden wird.

Das Blockierelement 26 befindet sich in den Figuren 3 und 4 in einer Normalstellung. In dieser Stellung ist das Blockierelement parallel zu einer Umfangsrichtung U des Sägeblatts 12 angeordnet.

Dabei ist das Blockierelement 26 aus drei Abschnitten aufgebaut.

Das Blockierelement 26 umfasst einen Lagerabschnitt 38.

In der dargestellten Ausführungsform ist der Lagerabschnitt 38 hülsenförmig, d.h. der Lagerabschnitt 38 umfasst eine kreiszylinderförmige Lageröffnung 40, die von einer Wandung 41 mit im Wesentlichen konstanter Wandstärke begrenzt ist.

Der feststehende Lagerbolzen 30 ist in der Lageröffnung 40 aufgenommen, sodass das Blockierelement 26 über den Lagerabschnitt 38 und den Lagerbolzen 30 drehbar am Rahmen 20 der Sägevorrichtung 10 gelagert ist.

Das Blockierelement 26 umfasst ferner einen Kopfabschnitt 42.

Der Kopfabschnitt 42 ist an einem dem Lagerabschnitt 38 entgegengesetzten Ende des Blockierelements 26 vorgesehen.

Dabei ist der Kopfabschnitt 42 dazu ausgebildet, bei einer Betätigung der Notbremseinheit 24, d.h. angetrieben durch die Aktuatoreinheit 32, in das Sägeblatt 12 einzugreifen, um dieses idealerweise bis zum Stillstand abzubremsen.

In diesem Zusammenhang umfasst der Kopfabschnitt 42 einen Koppelabschnitt 44.

Der Koppelabschnitt 44 ist an einem dem Lagerabschnitt 38 entgegengesetzten Ende des Blockierelements 26 positioniert.

Der Koppelabschnitt 44 ist zudem radial außen am Kopfabschnitt 42 positioniert.

Der Koppelabschnitt 44 dient zwei unterschiedlichen Funktionen.

Zum einen ist der Koppelabschnitt 44 dazu ausgebildet, eine von der Aktuatoreinheit 32 generierte Betätigungskraft in das Blockierelement 26 einzuleiten, sodass der Kopfabschnitt 42 ins Sägeblatt 12 eingreifen kann.

Zum anderen dient der Koppelabschnitt 44 dazu, das Blockierelement 26 zumindest in der in Figur 3 und 4 dargestellten Normalstellung gegenüber dem Rahmen 20 zu fixieren oder zu arretieren. Somit wird der Kopfabschnitt 42 in der Normalstellung daran gehindert, ins Sägeblatt 12 einzugreifen.

Die Funktionen der Krafteinleitung und der Arretierung können dabei separat voneinander oder gemeinsam, d.h. kombiniert, umgesetzt sein. Letzteres ist bei den Ausführungsformen gemäß Figuren 1 bis 10 der Fall.

Hier umfasst der Koppelabschnitt 44 zwei Koppelöffnungen 46.

Zudem ist ein U-förmiges Formschlusselement 48 vorgesehen, welches einerseits an der Aktuatoreinheit 32 befestigt ist, z. B. formschlüssig, und das andererseits zu den Koppelöffnungen 46 komplementäre Noppen aufweist, die in die Koppelöffnungen 46 eingreifen. Das Formschlusselement 48 ist also formschlüssig sowohl mit dem Blockierelement 26 als auch mit der Aktuatoreinheit 32 gekoppelt.

Somit kann über das Formschlusselement 48 einerseits eine von der Aktuatoreinheit 32 generierte Betätigungskraft in das Blockierelement 26 eingeleitet werden. Andererseits wird das Blockierelement 26 über das Formschlusselement 48 und die Aktuatoreinheit 32 in der Normalstellung relativ zum Rahmen 20 arretiert.

Es versteht sich dabei, dass alternativ die Koppelöffnungen 46 und die zugeordneten Noppen auch weggelassen werden können. Anstelle des U-förmigen Formschlusselements 48 wird dann ein ebenfalls U-förmiges Klemmelement verwendet, das auf dem Koppelabschnitt 44 festgeklemmt, d.h. im Bereich des Koppelabschnitts 44 kraftschlüssig mit dem Blockierelement 26 verbunden, ist. Die Befestigung eines solchen Klemmelements an der Aktuatoreinheit 32 kann formschlüssig oder kraftschlüssig erfolgen.

Der Kopfabschnitt 42 umfasst ferner eine Einschnittzone 50.

In der dargestellten Ausführungsform ist die Einschnittzone 50 durch ein zweireihiges Muster an Durchgangsöffnungen 52 charakterisiert. Der besseren Übersichtlichkeit wegen sind in den Figuren nur einige der Durchgangsöffnungen 52 mit einem Bezugszeichen versehen.

Mittels der Durchgangsöffnungen 52 wird das Material des Kopfabschnitts 42 im Bereich der Einschnittzone 50 gezielt geschwächt, sodass nach einer Auslösung der Notbremseinheit 24 das Sägeblatt 12 sanft und über einen möglichst großen Bereich des Kopfabschnitts 42 in diesen einschneidet.

Dadurch ergibt sich eine zuverlässige Kopplung zwischen dem Sägeblatt 12 und dem Blockierelement 26, die zum zuverlässigen Abbremsen einer Rotation des Sägeblatts 12 notwendig ist.

Im Wesentlichen zwischen dem Koppelabschnitt 44 und der Einschnittzone 50 ist eine Anbindungszone 54 vorgesehen.

In der dargestellten Ausführungsform umfasst auch die Anbindungszone 54 Durchgangsöffnungen 56. Wieder sind der besseren Übersichtlichkeit wegen in den Figuren nur einige der Durchgangsöffnungen 56 mit einem Bezugszeichen versehen. Dabei sind jedoch die Durchmesser der Durchgangsöffnungen 56 der Anbindungszone 54 deutlich größer gewählt als die Durchmesser der Durchgangsöffnungen 52 der Einschnittzone 50.

Die Anbindungszone 54 dient dazu, einerseits eine Betätigungskraft vom Koppelabschnitt 44 in die Einschnittzone 50 zu übertragen. Andererseits wird über die Anbindungszone 54 die Einschnittzone 50 mit dem nachfolgend noch zu erläuternden Verformungsabschnitt gekoppelt.

Die Durchgangsöffnungen 56 der Anbindungszone 54 dienen in diesem Zusammenhang dazu, eine ausreichende Steifigkeit der Anbindungszone 54 bei möglichst niedriger Masse und damit möglichst niedriger Massenträgheit zu gewährleisten.

Außerdem ist der Kopfabschnitt 42 mit einer Führungsfläche 58 ausgestattet.

Die Führungsfläche 58 liegt an einer Führungsgegenfläche 60 des Führungselements 36 an.

Aufgrund der Geometrie des Kopfabschnitts 42 und der Führungsgegenfläche 60 wird der Kopfabschnitt 42 mit einer Kraft in Richtung des Sägeblatts 12 beaufschlagt, wenn er in der Darstellung gemäß Figur 4 im Uhrzeigersinn entlang der Umfangsrichtung U des Sägeblatts 12 bewegt wird. Zu diesem Zweck weist die Führungsfläche 58 eine Normale mit einer Erstreckungskomponente nach radial außen auf.

Wie anhand der vorstehenden Erläuterungen deutlich wird, werden beim in den Figuren gezeigten Kopfabschnitt 42 Durchgangsöffnungen verwendet, um Bereiche unterschiedlicher Steifigkeit und unterschiedlicher Widerstände gegenüber dem Einschneiden durch das Sägeblatt 12 zu schaffen. Es versteht sich, dass dies alternativ zu den Durchgangsöffnungen auch dadurch erreicht werden kann, dass in den verschiedenen Bereichen des Kopfabschnitts 42 unterschiedliche Materialien vorgesehen werden. In diesem Zusammenhang kann es insbesondere darauf ankommen, Materialien unterschiedlicher Duktilität zu verwenden.

Zwischen dem Kopfabschnitt 42 und dem Lagerabschnitt 38 liegend umfasst das Blockierelement 26 einen Verformungsabschnitt 64.

Der Verformungsabschnitt 64 verbindet den Lagerabschnitt 38 und den Kopfabschnitt 42 miteinander.

Der Verformungsabschnitt 64 ist insgesamt bogenförmig, im dargestellten Ausführungsbeispiel kreisbogenförmig.

Dabei verläuft eine Bogenumfangsrichtung 66, d.h. die gekrümmt verlaufende Längserstreckungsrichtung des bogenförmigen Verformungsabschnitts 64 im Wesentlichen parallel zur Umfangsrichtung U des Sägeblatts 12.

In der dargestellten Ausführungsform verlaufen ein Außenumfang des Sägeblatts 12 und der bogenförmige Verformungsabschnitt 64 zudem konzentrisch, wobei die Mittelachse A das Zentrum darstellt.

Der Verformungsabschnitt 64 erstreckt sich dabei in der in Figur 4 dargestellten Ausführungsform über einen Abschnitt der Bogenumfangsrichtung 66 mit einem Mittelpunktswinkel von ca. 60 Grad.

Die umfangsmäßige Erstreckung des Verformungsabschnitt 64 beträgt somit im Wesentlichen das Doppelte der umfangsmäßigen Erstreckung des Kopfabschnitts 42. Der Kopfabschnitt 42 ist folglich umfangsmäßig kürzer als der Verformungsabschnitt 64.

Auch mit Bezug auf eine umfangsmäßige Erstreckung des Lagerabschnitts 38 ist der Verformungsabschnitt 64 um ein Vielfaches länger.

Außerdem ist der Verformungsabschnitt 64 in einer bezüglich der Mittelachse A des Sägeblatts 12 radialen Richtung weiter vom Außenumfang des Sägeblatts 12 beabstandet als der Kopfabschnitt 42 und der Lagerabschnitt 38.

Mit anderen Worten springen sowohl der Kopfabschnitt 42 als auch der Lagerabschnitt 38 bezüglich der Bogenumfangsrichtung 66 gegenüber dem Verformungsabschnitt 64 nach radial innen vor.

In diesem Zusammenhang ist der radiale Abstand D des Verformungsabschnitts 64 vom Sägeblatt 12 so gewählt, dass dieser in allen Betriebssituationen der Notbremseinheit 24 größer null ist. Das gilt insbesondere auch für eine später noch zu erläuternde Endstellung des Blockierelements 26.

Mit anderen Worten ist der Abstand D des Verformungsabschnitts 64 so gewählt, dass dieser in keiner Betriebssituation den Außenumfang des Sägeblatts 12 kontaktiert.

Der Verformungsabschnitt 64 umfasst weiter eine in der Bogenumfangsrichtung 66 plastisch verformbare Struktur 68.

In der in der Figur 4 dargestellten Ausführungsform ist diese Struktur 68 aus insgesamt elf Ringsegmenten 70 gebildet.

Die Ringsegmente 70 sind entlang der Bogenumfangsrichtung 66 mit einer leichten Überlappung benachbart angeordnet.

Jedes der Ringsegmente 70 hat eine Wand 72 mit einer im Wesentlichen konstanten Wandstärke t.

Dabei definieren die Wände 72 jeweils einen axial durchgehenden Hohlraum 74.

Der besseren Übersichtlichkeit wegen sind in den Figuren nur einige der Ringsegmente 70 sowie nur einige der Wände 72 und einige der Hohlräume 74 mit einem Bezugszeichen versehen.

Die in der Bogenumfangsrichtung 66 plastisch verformbare Struktur 68 umfasst also insgesamt elf entlang der Bogenumfangsrichtung 66 benachbart angeordnete Hohlräume 74.

Aufgrund der leichten Überlappung der Ringsegmente 70 ergibt sich für jeden Hohlraum 74 ein sichelmondförmiger Querschnitt.

Ferner ist im Inneren derjenigen drei Hohlräume 74, die benachbart zum Lagerabschnitt 38 angeordnet sind, jeweils ein Füllmaterial 76 angeordnet.

In der dargestellten Ausführungsform handelt es sich beim Füllmaterial um ein Gummimaterial.

Im Übrigen ist das Blockierelement 26 aus einer Aluminiumlegierung hergestellt.

Durch das Füllmaterial 76 ergibt sich im Bereich der mit dem Füllmaterial 76 versehenen Hohlräume 74 eine andere Steifigkeit des Verformungsabschnitts 64 als im Bereich der ungefüllten Hohlräume 74. Der Verformungsabschnitt 64 umfasst also zwei Bereiche mit unterschiedlichen Steifigkeiten oder allgemeiner gesagt einen Steifigkeitsverlauf.

Es versteht sich dabei, dass die Steifigkeit durch eine entsprechende Auswahl des Füllmaterials 76 sowie die Anzahl und Position der mit dem Füllmaterial 76 ausgefüllten Hohlräume 74 gezielt eingestellt werden kann.

Die Struktur 68 bewirkt insgesamt, dass eine Steifigkeit des Verformungsabschnitts 64 entlang der Bogenumfangsrichtung 66 kleiner ist als eine Steifigkeit des Kopfabschnitts 42.

Zudem weist die Struktur 68 Soll-Verformungsstellen 78 auf. Diese befinden sich in der in Figur 4 dargestellten Ausführungsform jeweils in den radial am weitesten nach innen ragenden und radial am weitesten nach außen ragenden Abschnitten der Ringsegmente 70.

Der besseren Übersichtlichkeit wegen sind in den Figuren abermals nur einige der Soll-Verformungsstellen 78 mit einem Bezugszeichen versehen.

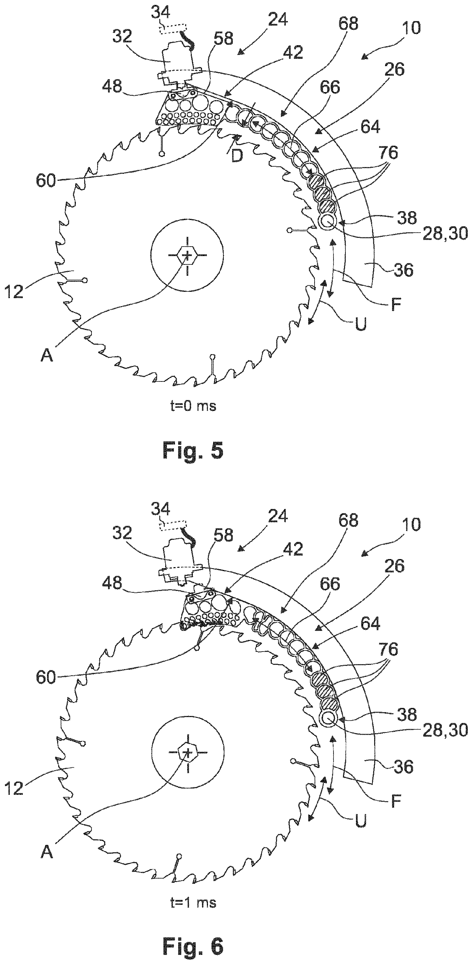

Der Verformungsabschnitt 64 ist folglich dazu ausgebildet, zum Bremsen des Sägeblatts 12 entlang der Bogenumfangsrichtung 66 plastisch verkürzt zu werden. Dies wird nachfolgend anhand der Figuren 5 bis 8 erläutert.

In diesem Zusammenhang zeigt die Figur 5 die Notbremseinheit 24 und insbesondere das Blockierelement 26 in der bereits beschriebenen Normalstellung. Das bedeutet, dass die Aktuatoreinheit 32 noch nicht zum Bewirken einer Notbremsung betätigt wurde.

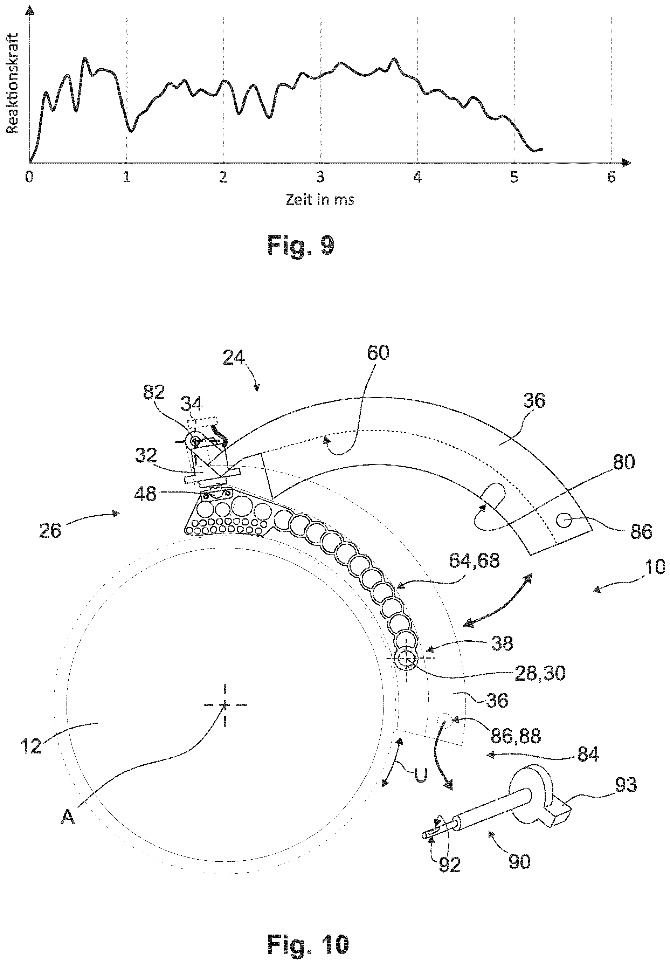

Dementsprechend wirkt auch noch keine Kraft auf das Blockierelement 26 (vgl. Figur 9).

Wie bereits erläutert wurde, wird das Blockierelement 26 über das Formschlusselement 48 und die Aktuatoreinheit 32 in der Normalstellung gehalten.

Die Stellung aus Figur 5 entspricht der Situation bei 0 Millisekunden im Diagramm der Figur 9.

Es wird nun davon ausgegangen, dass zum Zeitpunkt null Millisekunden (0 ms) die Notbremseinheit 24 ausgelöst wird. Das hat zur Folge, dass die Aktuatoreinheit 32 betätigt wird und den Kopfabschnitt 42 in Richtung des Sägeblatts 12 beaufschlagt wird. Dies erfolgt im dargestellten Ausführungsbeispiel über das Formschlusselement 48.

Es versteht sich, dass zeitglich der Antriebsmotor M deaktiviert und/oder von der Antriebswelle 22 entkoppelt wird.

In Figur 6 ist eine Situation dargestellt, die sich eine Millisekunde (1ms) nach dem Auslösen ergibt. Wieder kann der Situation in Figur 6 der Kraftverlauf bei 1ms in der Figur 9 zugeordnet werden.

In dieser Situation hat sich das Sägeblatt 12 in die Einschnittzone 50 eingeschnitten, sodass eine kraftmäßige Kopplung zwischen dem Sägeblatt 12 und dem Blockierelement 26 entstanden ist. Aufgrund der Rotation des Sägeblatts 12 im Uhrzeigersinn wurde zum in Figur 6 dargestellten Zeitpunkt der Kopfabschnitt 42 bereits gegenüber der Ausgangssituation aus Figur 5 um eine gewisse Umfangsstrecke entlang der Umfangsrichtung U des Sägeblatts 12 mitgenommen.

Das hat dazu geführt, dass die Verbindung zwischen dem Formschlusselement 48 und der Aktuatoreinheit 32 gelöst wurde.

Die Kopplung zwischen dem Formschlusselements 48 und dem Kopfabschnitt 42 ist vorliegend bestehen geblieben.

Es versteht sich, dass alternativ auch die Verbindung zwischen dem Formschlusselement 48 und dem Kopfabschnitt 42 getrennt und die Verbindung zwischen dem Formschlusselement 48 und der Aktuatoreinheit 32 beibehalten werden kann.

Das Führungselement 36 bewirkt in diesem Zusammenhang, dass das Blockierelement 26 weder in Radialrichtung noch in Axialrichtung sich der Mitnahme durch das Sägeblatt 12 entziehen kann. Das Blockierelement 26 wird also mittels des Führungselements 36 entlang der Führungsrichtung F geführt.

Die Mitnahme durch das Sägeblatt 12 hat ferner bewirkt, dass sich zumindest diejenigen drei Ringsegmente 70, die dem Kopfabschnitt 42 benachbart angeordnet sind, verformt haben.

Genauer gesagt wurden diese Ringsegmente entlang der Bogenumfangsrichtung 66 gestaucht.

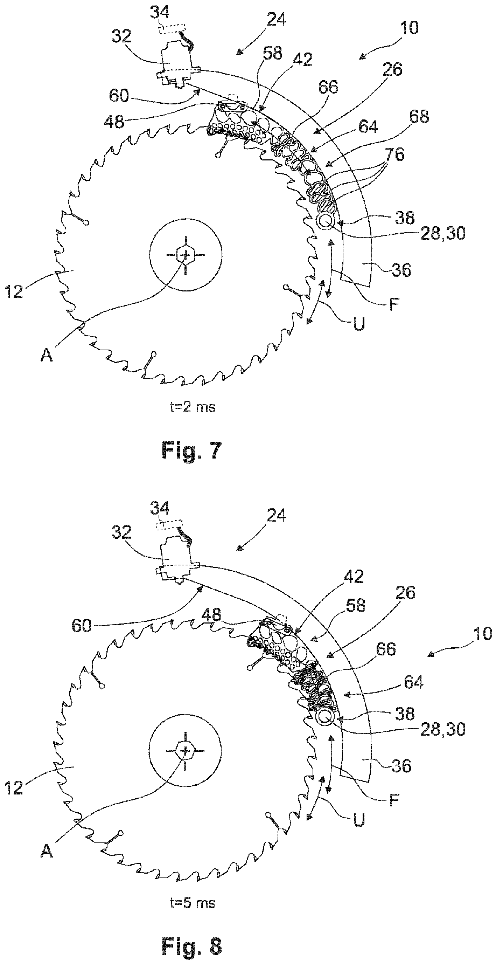

In der Figur 7 ist die Notbremseinheit 24 nach Ablauf einer weiteren Millisekunde, d.h. 2 Millisekunden nach dem Auslösen gezeigt.

Dabei ist der Kopfabschnitt 42 weiterhin mit dem Sägeblatt 12 gekoppelt.

Nunmehr sind jedoch alle Ringsegmente 70 entlang der Bogenumfangsrichtung 66 komprimiert, sodass der Verformungsabschnitt 64 bereits signifikant entlang der Bogenumfangsrichtung 66 plastisch verkürzt ist.

Dabei wird die kinetische Energie der Rotation des Sägeblatts 12 in die plastische Verkürzung des Verformungsabschnitts 64 umgesetzt, um das Sägeblatt 12 abzubremsen.

Figur 8 zeigt die Notbremseinheit 24 fünf Millisekunden (5ms) nach der Auslösung. Zu diesem Zeitpunkt steht das Sägeblatt 12 im Wesentlichen still, d.h. es rotiert nicht mehr.

Der Verformungsabschnitt 64 ist nun im Wesentlichen vollständig komprimiert, d.h. die Hohlräume 74 sind im Wesentlichen durch ein Zusammenschieben des Verformungsabschnitts 64 entlang der Bogenumfangsrichtung 66 geschlossen.

Die Figur 8 zeigt also die Notbremseinheit 24 am Ende eines Notbremsvorgangs. Die zugehörige Stellung des Blockierelements 26 wird auch als Endstellung bezeichnet.

Um die Notbremseinheit 24 und die Sägevorrichtung 10 insgesamt wieder in Betrieb nehmen zu können, d.h. um eine Sägevorrichtung 10, deren Notbremseinheit 24 ausgelöst wurde, wieder einsatzbereit zu machen, muss nun das Blockierelement 26 ausgetauscht werden.

Zu diesem Zweck ist das Blockierelement 26 wahlweise separat von der Aktuatoreinheit 32 vom Rahmen 20 demontierbar. Das Blockierelement 26 kann also singulär demontiert werden. Dies wird in Verbindung mit Figur 10 erläutert.

Wie bereits erwähnt, ist das Blockierelement 26 über den feststehenden Lagerbolzen 30 drehbar am Rahmen 20 gelagert.

Damit das Blockierelement 26 entlang einer Axialrichtung des Lagerbolzens 30 nicht vom Lagerbolzen getrennt werden kann, ist ein Halteelement 80 zum Halten des Blockierelements 26 am Lagerbolzen 30 vorgesehen.

In der dargestellten Ausführungsform handelt es sich bei diesem Halteelement 80 um einen Seitenwandabschnitt des Führungselements 36, d.h. um einen Abschnitt einer Wand des Führungselements 36, der eine axiale Verlagerung des Blockierelements 26 verhindert.

Wenn das Führungselement 36 in seiner in Figur 10 gestrichelt dargestellten Betriebsstellung ist, wird folglich das Blockierelement 26 auf dem Lagerbolzen 30 gehalten.

Das Führungselement 36 ist über ein weiteres Lagerelement 82, das ebenfalls als Lagerbolzen ausgeführt ist, drehbar am Rahmen 20 gelagert.

Dadurch lässt sich das Führungselement 36 zur Demontage des Blockierelements 26 in eine Freigabestellung überführen, die in der Figur 10 mit durchgezogenen Linien dargestellt ist. In der Freigabestellung ist das Halteelement 80 vom Lagerelement, d.h. vom Lagerbolzen 30, entfernt.

Damit das Führungselement 36 nicht in unerwünschter Weise die Freigabestellung einnimmt, ist dieses mittels eines Verriegelungsmechanismus 84 in der Betriebsstellung verriegelbar (siehe neben der Figur 10 auch Figur 3).

Der Verriegelungsmechanismus 84 umfasst eine erste Durchgangsöffnung 86 am Führungselement 36 und eine zweite Durchgangsöffnung 88 am Rahmen 20.

Ferner weist der Verriegelungsmechanismus 84 einen Verriegelungsstift 90 auf.

An einem ersten Ende ist der Verriegelungsstift 90 mit Verriegelungsflügeln 92 ausgestattet und an einem zweiten, dem ersten Ende entgegengesetzten Ende mit einem Bedienhebel 93.

Der Verriegelungsstift 90 kann somit in die Durchgangsöffnungen 86 und 88 eingesteckt und mittels des Bedienhebels 93 in eine Drehstellung überführt werden, in der die Verriegelungsflügel 92 einen Abschnitt des Rahmens 20 hintergreifen.

In einer anderen Drehstellung ist das Hintergreifen aufgelöst, sodass der Verriegelungsstift aus den Durchgangsöffnungen 86 und 88 axial herausgezogen werden kann.

Mittels des Verriegelungsmechanismus 84 lässt sich das Führungselement 36 also wahlweise am Rahmen 20 verriegeln und wahlweise vom Rahmen 20 entriegeln. Das gilt natürlich auch für das vom Führungselement 36 gebildete Halteelement 80.

Dabei wird zum Bedienen des Verriegelungsstifts 90 und somit zum Demontieren des Blockierelements 26 keinerlei Werkzeug benötigt.

Zum singulären Demontieren des Blockierelements 26 wird folglich lediglich der Verriegelungsstift 90 entriegelt und vom Rahmen 20 entnommen. Sodann wird das Führungselement 36 in die Freigabestellung überführt und das Blockierelement 26 entlang einer Axialrichtung des Lagerbolzens 30 von diesem abgezogen, d.h. vom Rahmen demontiert.

Nachfolgend wird ein unbenutztes Blockierelement 26 montiert.

Hierzu wird der Lagerabschnitt 38 des unbenutzten Blockierelements 26 auf den feststehenden Lagerbolzen 30 aufgesteckt.

Ferner wird das unbenutzte Blockierelement 26 mit der Aktuatoreinheit 32 gekoppelt.

Dann wird das Führungselement 36 wieder in die Betriebsstellung überführt und mittels des Verriegelungsstifts 90 dort verriegelt.

Darüber hinaus muss die Aktuatoreinheit 32 wieder in ihre Ausgangsstellung zurückgesetzt werden. Dies kann mittels der Steuerungseinheit 34 erfolgen.

Nun ist die Sägevorrichtung 10 wieder betriebsbereit und die Notbremseinheit 24 wieder einsatzbereit.

Bei der in den Figuren 1 bis 10 dargestellten Notbremseinheit 24 wird der Kopfabschnitt 42 stets sowohl wahlweise von der Aktuatoreinheit 32 in Eingriff mit dem Sägeblatt 12 gebracht als auch in der Normalstellung derart von der Aktuatoreinheit 32 gehalten, dass der Kopfabschnitt 42 nicht unabsichtlich in Kontakt mit dem Sägeblatt 12 gelangt.

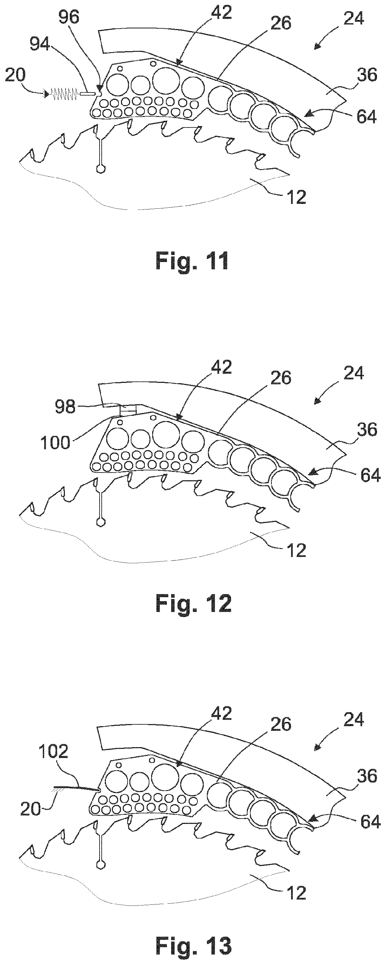

In den Figuren 11 bis 14 sind Alternativen für die Arretierung des Blockierelements 26 in der Normalstellung gezeigt. Die Kraftbeaufschlagung erfolgt dabei wie gehabt über ein mit dem Hubmagneten der Aktuatoreinheit 32 gekoppeltes Druckstück, das dazu ausgebildet ist, den Kopfabschnitt 42 in Richtung Sägeblatt 12 mit einer Betätigungskraft zu beaufschlagen. Das Druckstück kann als Stößel ausgebildet sein.

In diesem Zusammenhang wird in der Alternative gemäß Figur 11 das Blockierelement 26 mittels eines federbelasteten Stifts 94 in der Normalstellung gehalten. Hierzu greift der federbelastete Stift 94 in eine zugeordnete Vertiefung 96 an einer umfangsmäßigen Stirnseite des Blockierelements 26 ein.

Die Aktuatoreinheit 32 entspricht der Aktuatoreinheit 32 der Ausführungsform aus den Figuren 1 bis 10. Wird diese ausgelöst, drückt sie das Blockierelement 26 in Richtung Sägeblatt 12. Dadurch wird der Stift 94 entgegen der Federkraft aus der Vertiefung 96 gedrückt.

In der Alternative gemäß Figur 12 ist ein Magnet 98 und ein Gegenstück 100 aus ferromagnetischem Material vorgesehen. Im dargestellten Beispiel ist der Magnet am Führungselement 36 befestigt und das Gegenstück 100 am Kopfabschnitt 42 des Blockierelements 26.

Dabei ist die Paarung aus Magnet 98 und Gegenstück 100 so gewählt, dass mittels der Aktuatoreinheit 32 der Kopfabschnitt 42 und damit das Gegenstück 100 entgegen einer Magnetkraft vom Magnet 98 abgelöst werden kann, wenn die Notbremseinheit 24 betätigt wird.

In der Alternative gemäß Figur 13 ist ein Blattfederelement 102 über ein erstes Ende am Rahmen 20 befestigt. Ein zweites Ende des Blattfederelements 102 ist in einer Vertiefung 104 aufgenommen, die stirnseitig am Blockierelement 26 angeordnet ist. Dadurch wird das Blockierelement 26 in der Normalstellung gehalten.

Die Aktuatoreinheit 32 entspricht wieder der Aktuatoreinheit 32 der Ausführungsform aus den

Figuren 1 bis 10. Wird diese ausgelöst, drückt sie das Blockierelement 26 in Richtung Sägeblatt 12. Dadurch wird das Blattfederelement 102 verformt, sodass dessen freies Ende aus der Vertiefung 104 springt und das Blockierelement freigibt.

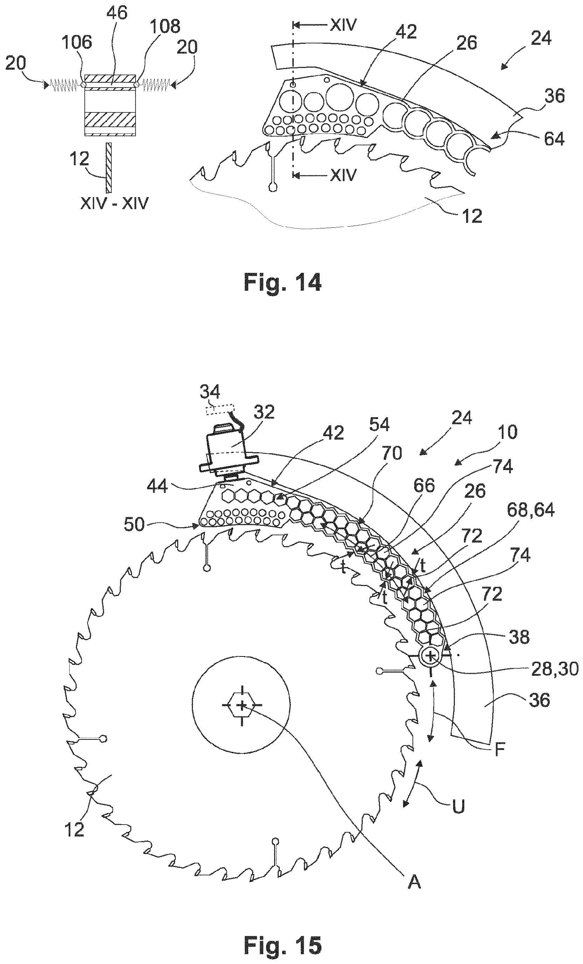

Bei der Alternative aus Figur 14 sind zwei Kugeln 106, 108 vorgesehen, die jeweils an unterschiedlichen Enden einer der Koppelöffnungen 46 eingreifen.

Dabei sind die Kugeln 106, 108 federbelastet, sodass sie bei Betätigung der Aktuatoreinheit 32 aus den Koppelöffnungen 46 herausgedrängt werden können und somit das Blockierelement 26 freigeben können.

Die Figur 15 zeigt abschnittsweise eine alternative Sägevorrichtung 10.

Dabei wird im Folgenden lediglich auf die Unterschiede zu den bereits erläuterten Sägevorrichtungen 10 eingegangen. Gleiche oder einander entsprechende Elemente werden mit denselben Bezugszeichen versehen.

Die Unterschiede betreffen das Blockierelement 26.

Anders als in den vorhergehenden Ausführungsformen umfasst der Verformungsabschnitt 64 nun sechseckige Ringsegmente 70. Das bedeutet, dass die Wände der 72 der Ringsegmente 70 jeweils Sechsecke bilden und die von diesen Wänden 72 definierten Durchgangsöffnungen 74 jeweils einen sechseckigen Querschnitt haben.

Ein weiterer Unterschied besteht darin, dass nunmehr zwei radial benachbarte Reihen an Ringsegmenten 70 vorgesehen sind. Jede dieser Reihen an Ringsegmenten 70 weist zudem 16 Ringsegmente 70 auf. Es sind also in jeder Reihe mehr Ringsegmente 70 vorgesehen als beispielsweise beim Blockierelement 26 aus Figur 4.

Die plastisch verformbare Struktur 68 des Blockierelements 26 aus Figur 15 kann auch als Wabenstruktur bezeichnet werden.

Der besseren Übersichtlichkeit wegen sind wieder nur einige der Ringsegmente 70 sowie nur einige der Wände 72 und einige der Hohlräume 74 mit einem Bezugszeichen versehen.

Die Soll-Verformungsstellen 78 sind nun durch diejenigen Abschnitte der Wände 72 jedes Ringsegments 70 gebildet, die die jeweils radial am weitesten nach innen ragende Ecke des sechseckigen Querschnitts und die radial am weitesten nach außen ragende Ecke des sechseckigen Querschnitts umfassen.

Jedes Ringsegment 70 umfasst also zwei Soll-Verformungsstellen 78, eine radial innere und eine radial äußere.

Auch die Durchgangsöffnungen im Kopfabschnitt 42, genauer gesagt die Durchgangsöffnungen 56 in der Anbindungszone 54 haben nun sechseckige Querschnitte. Zudem sind sie leicht anders angeordnet als beim Blockierelement 26 aus Figur 4.

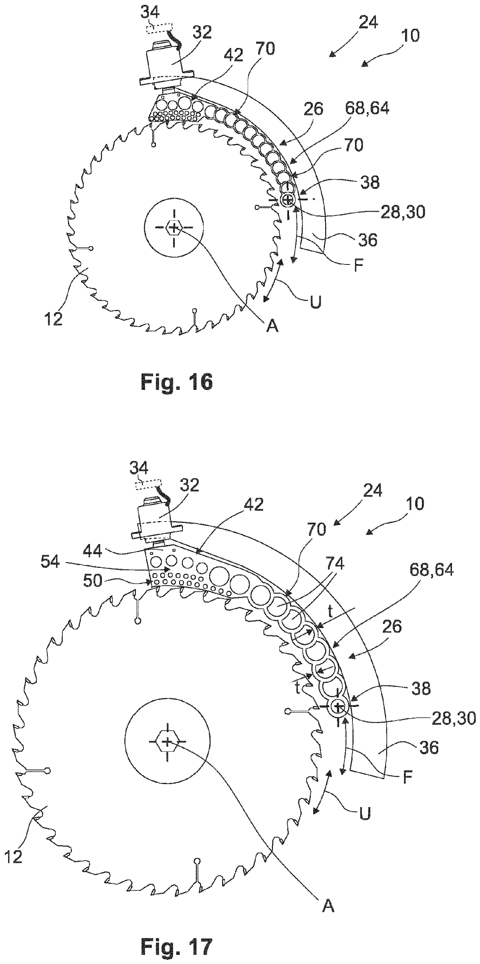

Eine weitere alternative Sägevorrichtung 10 zeigt abschnittsweise Figur 16.

Wieder werden nur die Unterschiede zu den vorhergehenden Ausführungsformen erläutert.

Die Sägevorrichtung 10 aus Figur 16 weist ein deutlich kleineres Sägeblatt 12 auf als die zuvor erläuterten Sägevorrichtungen.

Dabei unterscheidet sich das Blockierelement 26 hinsichtlich seiner Form nicht vom Blockierelement 26 aus Figur 10. Es wurde nur proportional skaliert.

Das lässt sich insbesondere durch einen Größenvergleich zwischen dem Blockierelement 26 und der Aktuatoreinheit 32, die in den Ausführungsformen gemäß Figuren 10 und 16 identisch ist, erkennen.

Noch eine alternative Sägevorrichtung 10 zeigt abschnittsweise Figur 17.

Wieder wird lediglich auf die Unterschiede zu den vorhergehenden Ausführungsformen eingegangen. Diese betreffen wieder das Blockierelement 26.

In der Ausführungsform gemäß Figur 17 ist der Kopfabschnitt 42 des Blockierelements 26 anders gestaltet.

Zum einen ist dessen Stirnseite nicht mehr spitz, sondern stumpf ausgeführt.

Zum anderen ist dieser im Vergleich zu den bisherigen Kopfabschnitten 42 entlang der Bogenumfangsrichtung 66 länger.

Das zieht auch eine erhöhte Anzahl sowie Änderungen in der Größe und Position der Durchgangsbohrungen 56 im Anbindungsabschnitt 54 nach sich.

Nachdem die Gesamtlänge des Blockierelements 26 entlang der Bogenumfangsrichtung 66 gleich geblieben ist, ist der Verformungsabschnitt 64 nun kürzer gestaltet. Dieser umfasst nun nur noch insgesamt sieben Ringsegmente 70. Die Wandstärke t der zugehörigen Wände 72 wurde im Vergleich zur Ausführungsform gemäß Figur 4 vergrößert.

Der besseren Übersichtlichkeit wegen sind wieder nur einige der Ringsegmente 70 sowie nur einige der Wände 72 und einige der Hohlräume 74 mit einem Bezugszeichen versehen.

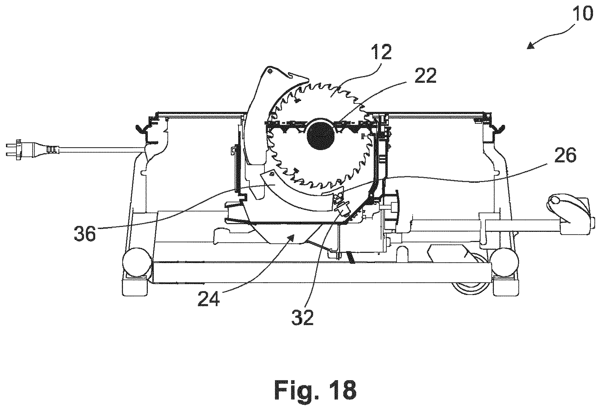

Eine zusätzliche Ausführungsform einer Sägevorrichtung 10 zeigt Figur 18.

Nunmehr ist die Sägevorrichtung 10 als Tischkreissäge ausgebildet.

Im Übrigen, insbesondere was die Notbremseinheit 24 anbelangt, gelten die vorstehenden Erläuterungen in analoger Weise.

Es wird bemerkt, dass in allen vorgenannten Ausführungsformen auch die Aktuatoreinheit 32 wahlweise singulär vom Rahmen 20 demontierbar sein kann. Dies dient der einfachen Reparatur der Notbremseinheit 24 für den Fall, dass an der Aktuatoreinheit 32 ein Defekt auftritt.

Auch die Demontage der Aktuatoreinheit 32 kann werkzeugfrei erfolgen.

### Bezugszeichenliste

- 10: Sägevorrichtung
- 12: Sägeblatt
- 14: Basisbaugruppe
- 16: Armbaugruppe
- 18: Auflagefläche
- 20: Rahmen
- 22: Antriebswelle
- 24: Notbremseinheit
- 26: Blockierelement
- 28: Lagerelement
- 30: Lagerbolzens
- 32: Aktuatoreinheit
- 34: Steuerungseinheit
- 36: Führungselement
- 38: Lagerabschnitt
- 40: Lageröffnung
- 41: Wandung
- 42: Kopfabschnitt
- 44: Koppelabschnitt
- 46: Koppelöffnungen
- 48: Formschlusselement
- 50: Einschnittzone
- 52: Durchgangsöffnung
- 54: Anbindungszone
- 56: Durchgangsöffnung
- 58: Führungsfläche
- 60: Führungsgegenfläche
- 64: Verformungsabschnitt
- 66: Bogenumfangsrichtung
- 68: plastisch verformbare Struktur
- 70: Ringsegment
- 72: Wand
- 74: Hohlraum
- 76: Füllmaterial
- 78: Soll-Verformungsstelle
- 80: Halteelement
- 82: Lagerelement
- 84: Verriegelungsmechanismus
- 86: erste Durchgangsöffnung
- 88: zweite Durchgangsöffnung
- 90: Verriegelungsstift
- 92: Verriegelungsflügel
- 93: Bedienhebel
- 94: Stift
- 96: Vertiefung
- 98: Magnet
- 100: Gegenstück
- 102: Blattfederelement
- 104: Vertiefung
- 106: Kugel
- 108: Kugel
- A: Mittelachse des Sägeblatts
- D: radialer Abstand des Verformungsabschnitts vom Sägeblatt
- M: Antriebsmotor
- U: Umfangsrichtung des Sägeblatts
- F: Führungsrichtung
- G: Bereich für ein nicht dargestelltes Gehäuseteil
- t: Wandstärke

## Patentansprüche

1. Blockierelement (26) für eine Notbremseinheit (24) einer Sägevorrichtung (10) mit kreisscheibenförmigem Sägeblatt (12), wobei das Blockierelement (26) umfasst:
- einen Lagerabschnitt (38), über den das Blockierelement (26) an der Sägevorrichtung (10) lagerbar ist,
- einen Kopfabschnitt (42), der dazu ausgebildet ist, wahlweise zum Bremsen in das Sägeblatt (12) einzugreifen, und
- einen Verformungsabschnitt (64), der zwischen dem Lagerabschnitt (38) und dem Kopfabschnitt (42) liegt und/oder den Lagerabschnitt (38) und den Kopfabschnitt (42) miteinander verbindet,
wobei der Verformungsabschnitt (64) bogenförmig ist und dazu ausgebildet ist, zum Bremsen des Sägeblatts (12) entlang einer Bogenumfangsrichtung (66) plastisch verkürzt zu werden.

2. Blockierelement (26) nach einem der vorhergehenden Ansprüche, wobei der Kopfabschnitt (42) entlang der Bogenumfangsrichtung (66) kürzer ist als der Verformungsabschnitt (64).

3. Blockierelement (26) nach einem der vorhergehenden Ansprüche, wobei der Kopfabschnitt (42) bezüglich der Bogenumfangsrichtung (66) gegenüber dem Verformungsabschnitt (64) nach radial innen vorspringt.

4. Blockierelement (26) nach einem der vorhergehenden Ansprüche, wobei der Kopfabschnitt (42) entlang der Bogenumfangsrichtung (66) eine größere Steifigkeit aufweist als der Verformungsabschnitt (64).

5. Blockierelement (26) nach einem der vorhergehenden Ansprüche, wobei der Verformungsabschnitt (64) eine in der Bogenumfangsrichtung (66) plastisch verformbare Struktur (68) mit Soll-Verformungsstellen (78) umfasst.

6. Blockierelement (26) nach einem der vorhergehenden Ansprüche, wobei der Verformungsabschnitt (64) eine Mehrzahl an Hohlräumen (74) aufweist, die entlang der Bogenumfangsrichtung (66) benachbart angeordnet sind.

7. Blockierelement (26) nach Anspruch 6, wobei die Hohlräume (74) in einer Richtung, die bezüglich der Bogenumfangsrichtung (66) axial verläuft, durchgehend sind.

8. Blockierelement (26) nach Anspruch 6 oder 7, wobei wenigstens ein Hohlraum (74) durch eine Wand (72) mit konstanter Wandstärke (t) begrenzt ist.

9. Blockierelement (26) nach einem der Ansprüche 6 bis 8, wobei die Hohlräume (74) durch benachbart angeordnete Ringsegmente (70) gebildet sind.

10. Blockierelement (26) nach einem der vorhergehenden Ansprüche, wobei der Verformungsabschnitt (64) einen Steifigkeitsverlauf aufweist.

11. Sägevorrichtung (10) mit einem kreisscheibenförmigen Sägeblatt (12) und einer Notbremseinheit (24), wobei die Notbremseinheit (24) ein Blockierelement (26) gemäß einem der vorhergehenden Ansprüche umfasst, das derart an der Sägevorrichtung (10) gelagert ist, dass es zum Bremsen des Sägeblatts (12) wahlweise in das Sägeblatt (12) eingreifen kann.

12. Sägevorrichtung (10) nach Anspruch 11, wobei das Blockierelement (26) in einer Normalstellung parallel zu einem Umfang des Sägeblatts (12) angeordnet ist.

13. Sägevorrichtung (10) nach Anspruch 12, wobei in der Normalstellung ein radialer Abstand (D) des Verformungsabschnitts (64) vom Sägeblatt (12) größer ist als ein radialer Abstand des Kopfabschnitts (42) vom Sägeblatt (12).

14. Sägevorrichtung (10) nach einem der Ansprüche 11 bis 13, wobei in einer Endstellung des Blockierelements (26) der Verformungsabschnitt (64) radial vom Sägeblatt (12) beabstandet ist.

15. Sägevorrichtung (10) nach einem der Ansprüche 11 bis 14, wobei das Blockierelement (26) wahlweise separat von einer Aktuatoreinheit (32) von der Sägevorrichtung (10) demontierbar ist.
